# EUROPEAN PATENT APPLICATION

(11) **EP 1 289 220 A1**
(43) Date of publication of application: **05.03.2003**
(21) Application number: 01440289.5
(22) Date of filing: 03.09.2001
(51) Int. Cl.: H04L 29/06, H04Q 7/22

(54) **Locally restricted open communication**

(71) Applicant: ALCATEL, 75008 Paris (FR)
(72) Inventor: Eisinger, Bernd, 3744 Stockern (AT)
(74) Representative: KOHLER SCHMID + PARTNER

(57) **Abstract**

In a method of transmitting local information from a sending terminal (S) to receiving terminals (R1, R2), the sending terminal (S) sends a message to be distributed to receiving terminals (R1, R2), a location area (4) of the sending terminal (S) is determined, a location area (4) covering a certain area around the sending terminal (S) is determined or receiving terminals (R1, R2) are selected depending on their location relative to the sending terminal (S) and said message is transmitted to all receiving terminals (R1, R2) inside said location area (4) or to all selected terminals. Thus p.ex. traffic information can be communicated effectively.

## Description

The present invention relates to a method of transmitting local information from a sending terminal to receiving terminals.

For some applications it can be important to communicate information to others being in the same area or region. For example, traffic information on traffic jams, accidents, road conditions in winter etc. are broadcasted via radio stations. The radio stations rely on getting information from the police or traffic participants calling the radio station on their mobile phone. Quite often it takes a considerate amount of time for such information to be broadcasted. For some participants listening to the radio that information may be too late. Furthermore, a lot of information may only be relevant to few drivers in a certain area.

It is hence the object of the invention to develop a method and implementation of the method allowing faster communication of information relevant to a certain area.

According to the invention this object is solved by a method of transmitting local information from a sending terminal to receiving terminals, where the sending terminal sends a message to be distributed to receiving terminals, a location area of the sending terminal is determined, a location area covering a certain area around the sending terminal is determined or receiving terminals are selected depending on their location relative to the sending terminal and said message is transmitted to all receiving terminals inside said location area or to all selected terminals.

This method allows a location based and distance restricted communication between drivers having a terminal. Thus, information about an upcoming problem like an accident, ice on the road, radar speed check etc. can be communicated to interested or affected drivers more quickly and efficiently without the derivation via a radio broadcast station. Road safety can hence be improved. Mobile phones can be used as terminals, thus the same terminal can be used for sending and receiving information. The communication can occur via an open communication channel restricted to a defined location. A location area can p.ex. be determined by choosing a radio cell of a mobile phone network in which the sending terminal is located. In this case the message sent from a sending terminal will be transmitted to all receiving terminals in the same cell. Alternatively, the message sent via the sending terminal can be communicated to receiving terminals which have a certain distance from the sending terminal, p.ex. 1, 2, 3 or 5 km. According to the invention, the distance can either be determined by a server or by the user of each receiving terminal. It is further possible to transmit a message from the sending terminal to a radio broadcast station for it to be broadcasted to a wider range of traffic participants via radio. Thus, drivers who will reach the location area later can also be warned. The method is not limited to traffic information and can also be used in other applications.

In a variant of the method, speech to text conversion is performed in the sending terminal and text to speech conversion is performed in the receiving terminals. Thus, voice can be transformed into a data format which can be transmitted more easily. Furthermore, a driver can use the method without taking his hands off the steering wheel.

An active or passive status may be selected for each terminal. In the active status or chat mode the user can communicate with other users, i.e. send and receive data via the terminal. In the passive status or emergency mode the terminal is held ready for incoming messages only. This could also be called stand-by mode.

In a further development of the method, in the active status sending messages takes priority over receiving messages. Hence it is ensured that a user can always send messages and thus warn other users about an upcoming problem.

The object of the invention is further solved by a network server with means to select receiving terminals depending on the location of a sending terminal. The location server determines the location of each user, i.e. terminal, at any time. A location area with respect to a particular sending terminal can therefore be determined effectively. The sending terminal is not required to have the means to determine the location of receiving terminals and to have up-to-date information on the location of other participating terminals. The information sent to the network server can also be further processed and statistically analyzed.

In an embodiment of the invention, the network server comprises means for receiving data from a sending terminal and for sending data to a receiving terminal. Thus communication between terminals via the network server is ensured.

Furthermore, the object is solved by a mobile network with mobile sending and receiving terminals and means to establish a permanent (data) communication channel. The communication channel can be realized as GPRS or UMTS data channel. Hence, existing channels can be used for the present invention.

Advantageously, the mobile network further comprises a network server. Thus administration of the sending and receiving terminals and determination of location areas and terminals in a certain location area can be performed centrally.

In yet another embodiment the sending and receiving terminals are mobile phones. Mobile phones can be easily modified to be used in the invention and for a cost effective implementation of the above method.

Additional distinctions and advantages of the invention can be gathered from the description of an embodiment of the invention, the drawing, which shows details relevant to the invention, and from the claims. The individual characteristics can be realized each individually or collectively in any combination in an embodiment of the invention.

The invention is schematically shown in the figure, such that the essential features of the invention can be easily recognized.

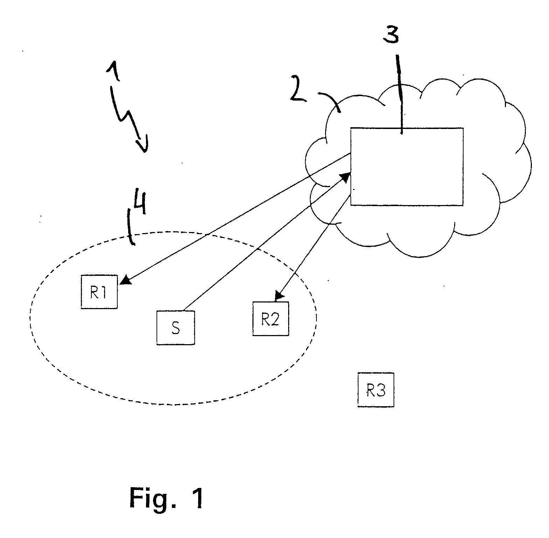

**Fig. 1** shows a schematic diagram of a mobile network **1**. A sending terminal **S** sends local information via a communication channel **2** to a network server **3**. The network server 3 determines a location area **4** depending on the location of the sending terminal S, i.e. an area around the sending terminal S. The server then determines the receiving terminals **R1, R2** located inside the location area 4. Then the message sent by the sending terminal is transmitted to the receiving terminals R1, R2 only. The message is not transmitted to the receiving terminal **R3** outside the location area 4. The terminals S, R1, R2, R3 can perform speech to text conversion of outgoing messages and text to speech conversion of incoming messages. They can be operated in active status for permanent public chat or in passive status for only receiving messages. The participation in public chat and the received messages depend on the location of a particular terminal and the distance from other terminals. As one of two terminals in the same location area moves relative the other terminal, the terminal may move into another location area and thus communicate with different terminals.

The following example shows one possible application of the locally restricted open communication system. A terminal S, R1, R2, R3 is used by a subscriber to the service of the mobile network 1. The terminal S, R1, R2, R3 is a mobile unit which can be used in a car. The terminal S, R1, R2, R3 is activated either in chat mode, i.e. an active status, allowing communication with other subscribers in the location area 4 or in emergency mode. In the active status the terminal S, R1, R2, R3 can receive and send messages, however, sending messages takes priority over receiving messages. The subscriber can send messages about the road condition, p.ex. ice on the road, to other subscribers in the same location 4 area and receive information on traffic or road conditions sent by other subscribers in the location area 4. If the terminal S, R1, R2, R3 is operated in the emergency mode, i.e. a passive status, the terminal S, R1, R2, R3 can only receive messages sent by further subscribers in the location area 4.

## Claims

1. Method of transmitting local information from a sending terminal (S) to receiving terminals (R1, R2), where
a. The sending terminal (S) sends a message to be distributed to receiving terminals (R1, R2)
b. A location area (4) of the sending terminal (S) is determined
c. A location area (4) covering a certain area around the sending terminal (S) is determined or receiving terminals (R1, R2) are selected depending on their location relative to the sending terminal (S) and
d. Said message is transmitted to all receiving terminals (R1, R2) inside said location area (4) or to all selected terminals.

2. Method according to claim 1, **characterized in that** in the sending terminal (S) speech to text conversion is performed and in the receiving terminals (R1, R2) text to speech conversion is performed.

3. Method according to claim 1, **characterized in that** an active or passive status is selected for each terminal (S, R1, R2, R3).

4. Method according to claim 3, **characterized in that** in the active status sending messages takes priority over receiving messages.

5. Network server (3) with means to select receiving terminals depending on the location of a sending terminal (S).

6. Network server according to claim 5, **characterized in that** the network server (3) comprises means for receiving data from a sending terminal (S) and for sending data to a receiving terminal (R1, R2, R3).

7. Mobile network (1) with mobile sending and receiving terminals (S, R1, R2, R3) and means to establish a permanent (data) communication channel (2).

8. Mobile network according to claim 7, **characterized in that** the mobile network (1) further comprises a network server (3).

9. Mobile network according to claim 7, **characterized in that** the sending and receiving terminals (S, R1, R2, R3, R4) are mobile phones.
